# EUROPEAN PATENT SPECIFICATION

(11) **EP 2 731 393 B1**
(45) Date of publication and mention of the grant of the patent: **07.06.2017**
(21) Application number: 14153055.0
(22) Date of filing: 11.08.2009
(51) Int. Cl.: H04W 72/04

(54) **Retransmission resource allocation method and apparatus for wireless communication system**
Verfahren und Vorrichtung für die Resourcenzuordnung für Übertragungswiederholung eines drahtlosen Kommunikationssystems
Procédé et Appareil d'attribution de ressources de retransmission pour système de communication sans fil

(30) Priority: 12.08.2008 KR 20080078918
(43) Date of publication of application: 14.05.2014
(62) Divisional of application: 09167616.3
(73) Proprietor: Samsung Electronics Co., Ltd, Gyeonggi-do 443-742 (KR)
(72) Inventor: Kim, Soeng Hun, Gyeonggi-do (KR); Van Lieshout, Gert-Jan, Gyeonggi-do (KR)
(74) Representative: Grünecker Patent- und Rechtsanwälte PartG mbB

(56) References cited:
- WO-A2-2008/024890
- WO-A2-2009/022855
- WO-A2-2009/041785
- WO-A2-2009/115904
- EMAIL RAPPORTEUR: "Summary of the email discussion on remaining issues on Semi Persistent Scheduling", 3GPP DRAFT; R2-083144 REMAINING ISSUES IN SEMI PERSISTENT SCHEDULING REV1, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Warsaw, Poland; 20080626, 26 June 2008 (2008-06-26), XP050140576,
- PANASONIC: "Remaining issues on Persistent scheduling", 3GPP DRAFT; R2-083311, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Warsaw, Poland; 20080624, 24 June 2008 (2008-06-24), XP050140723, [retrieved on 2008-06-24]

## Description

### BACKGROUND OF THE INVENTION

### 1. Field of the Invention

The present invention generally relates to a wireless communication system and, in particular, to a retransmission resource allocation method and apparatus for a wireless communication system for allocating retransmission resources using a semi-persistent resource allocation message indicating retransmission resource allocation.

### 2. Description of the Related Art

Universal Mobile Telecommunications System (UMTS) is one of the 3rd Generation (3G) mobile telecommunication technologies, which has evolved from Global System for Mobile communications (GSM) and General Packet Radio Services (GPRS) and uses Wideband Code Division Multiple Access (WCDMA).

The 3^{rd} Generation Partnership Project (3GPP), which is responsible for the standardization of UMTS, is working to significantly extend the performance of UMTS through Long Term Evolution (LTE). LTE is a 3GPP standard that provides for a downlink speed of up to 100Mbps and is expected to be commercially launched in 2010. In order to fulfill the requirements for the LTE systems, studies have been performed in various aspects including reducing the number of involved nodes in the connections and placing radio protocol entities as close as to the radio channels.

Particularly, LTE uses per-packet scheduling such that, when transmitting data on an allocated resource, traffic overload occurs on a control channel with scheduling request information and resource allocation information. In order to reduce the control channel signaling, Semi-Persistent Scheduling (SPS) is used. Also, the LTE supports Automatic Repeat reQuest (ARQ) and Hybrid Automatic Repeat reQuest (HARQ) for retransmission of packets. In this regard, WO2009/115904 A1 and WO2008/024890 A2 disclose semi-persistent resource allocation schemes. In general, the base station transmits a "normal resource allocation message" whenever a packet is transmitted as the first HARQ transmission or retransmission. When using the semi-persistent resource allocation, however, the base station allocates the semi-persistent resource in units of a predetermined resource size (e.g., at least one resource block) according to a predefined periodicity, and the user equipment receives the packets on the assigned semi-persistent resource. When the semi-persistent resource is assigned, the assigned resource is implicitly reused according to the periodicity, rather than transmitting the resource allocation message repeatedly.

Therefore, the user equipment stores a value indicating the status of the most recently received packet for discriminating the first transmission and retransmission of a packet, but this process increases the processing complexity of the user equipment. Accordingly, when a semi-persistent resource allocation message transmitted by the base station is missed by an unexpected reason or the semi-persistent resource allocation message is decoded erroneously and a next semi-persistent resource allocation message is received successfully, the user equipment cannot determine whether the currently received semi-persistent resource allocation message is indicative of a semi-persistent resource allocation (or reallocation) or a resource allocation for retransmission using the semi-persistent resource.

### SUMMARY OF THE INVENTION

In order to address at least the above-mentioned problems and/or disadvantages of the prior art, the present invention provides a retransmission resource allocation for the wireless communication that allocates retransmission resources using a semi-persistent resource allocation message for discriminatively indicating retransmission resource allocation and semi-persistent resource allocation.

In accordance with an embodiment of the present invention, a retransmission resource allocation method for a wireless communication system is provided. The method includes receiving, at a mobile terminal, a semi-persistent resource allocation message; determining whether the semi-persistent resource allocation message indicates a retransmission resource allocation or a semi-persistent resource allocation, based on usage information included in the semi-persistent resource allocation message; and executing, when the semi-persistent resource allocation message indicates the retransmission resource allocation, a retransmission operation based on resource assignment information included in the semi-persistent resource allocation message.

The retransmission resource allocation method, may further comprise utilizing, when the semi-persistent resource allocation message indicates the semi-persistent resource allocation, the resource indicated by the resource assignment information included in the semi-persistent resource allocation message as a semi-persistent resource.

The usage information may be a value of a New Data Indicator (NDI) field of the semi-persistent resource allocation message.

Determining whether the semi-persistent resource allocation message may indicate the retransmission resource allocation or the semi-persistent resource allocation may comprise:
determining, when the value of the NDI field is set to 1, that the semi-persistent resource allocation message indicates the retransmission resource allocation; and
determining, when the value of the NDI field is set to 0, that the semi-persistent resource allocation message indicates the semi-persistent resource allocation.

Receiving the semi-persistent resource allocation message may comprise:
performing a Cyclic Redundancy Check (CRC) test on a received message with a Semi-Persistent Scheduling Cell Radio Network Temporary Identifier (SPS C-RNTI) of the mobile terminal; and
determining, when the received message test passes the CRC test, that the received message is the semi-persistent resource allocation message.

In accordance with another embodiment of the present invention, a retransmission resource allocation method for a wireless communication system is provided. The method includes allocating, at a base station, a semi-persistent resource or a retransmission resource to a mobile terminal; generating a semi-persistent resource allocation message having usage information indicating a semi-persistent resource allocation or a retransmission resource allocation; calculating a Cyclic Redundancy Check (CRC) code with a Semi-Persistent Scheduling Cell Radio Network Temporary Identifier (SPS C-RNTI) of the mobile terminal; appending the CRC code to the semi-persistent resource allocation message; and transmitting the semi-persistent resource allocation message to the mobile terminal.

The usage information may be a value of a New Data Indicator (NDI) field of the semi-persistent resource allocation message.

Moreover, generating the semi-persistent resource allocation message may comprise:
setting, when the semi-persistent resource allocation message indicates the semi-persistent resource allocation, the NDI field to 0; and
setting, when the semi-persistent resource allocation message indicates the retransmission resource allocation, the NDI field to 1

In accordance with further another embodiment of the present invention, a retransmission apparatus of a mobile terminal is provided. The apparatus includes a transceiver for receiving data; a Physical Downlink Control Channel (PDCCH) processor for performing a Cyclic Redundancy Check (CRC) test on the data using a semi-persistent scheduling identifier of the mobile terminal to determine whether the data is a semi-persistent resource allocation message intended for the mobile terminal; and a semi-persistent resource controller for determining, when the data is a semi-persistent resource allocation message intended for the mobile terminal, whether usage information of the semi-persistent resource allocation message indicates a semi-persistent resource allocation or a retransmission resource allocation and executes, if the semi-persistent resource allocation message indicates the retransmission resource allocation, a retransmission operation according to resource allocation information contained in the semi-persistent resource allocation message.

In accordance with further another embodiment of the present invention, a resource allocation apparatus of a base station is provided. The apparatus includes a scheduler for allocating resources to a mobile terminal for a semi-persistent scheduling or a retransmission of an initial transmission using a semi-persistent resource; a resource allocation message generator for generating a semi-persistent resource allocation message having usage information; a semi-persistent resource controller for controlling the resource allocation message generator to set the usage information according to a usage of the semi-persistent resource allocation message; and a transceiver for transmitting the semi-persistent resource allocation message to the mobile terminal under a control of the semi-persistent resource controller.

According to a particular example of the retransmission apparatus, the semi-persistent resource controller registers, if the semi-persistent resource allocation message indicates the semi-persistent resource allocation, a resource indicated by the semi-persistent resource allocation message as a semi-persistent resource for the mobile terminal.

According to a particular example of the retransmission apparatus, the usage information is a value of a New Data Indicator (NDI) field of the semi persistent resource allocation message.

According to a particular example of the retransmission apparatus, the semi-persistent resource controller determines that the semi-persistent resource allocation message indicates the semi-persistent resource allocation when the value of the NDI field is set to 0 and determines that that the semi-persistent resource allocation message indicates the retransmission resource allocation when the value of the NDI field is set to 1.

Furthermore, it is provided a resource allocation apparatus of a base station, comprising:
a scheduler for allocating resources to a mobile terminal for a semi-persistent scheduling or a retransmission of an initial transmission using a semi-persistent resource;
a resource allocation message generator for generating a semi-persistent resource allocation message having usage information;
a semi-persistent resource controller for controlling the resource allocation message generator to set the usage information according to a usage of the semi-persistent resource allocation message and to append a Cyclic Redundancy Check (CRC) code calculated with a Semi-Persistent Scheduling Cell Radio Network Temporary Identifier (SPS C-RNTI) of the mobile terminal to the semi-persistent resource allocation message; and
a transceiver for transmitting the semi-persistent resource allocation message to the mobile terminal under a control of the semi-persistent resource controller.

In this apparatus, usage information may be a value of a New Data Indicator (NDI) field of the semi-persistent resource allocation message.

The semi-persistent resource controller may control the resource allocation message generator to set the NDI field to 1 when the usage of the semi-persistent resource allocation message indicates the retransmission resource allocation and may set the NDI field to 0 when the usage of the semi-persistent resource allocation message indicates the semi-persistent resource allocation.

### BRIEF DESCRIPTION OF THE DRAWINGS

The above and other objects, features and advantages of the present invention will be more apparent from the following detailed description in conjunction with the accompanying drawings, in which:
FIG. 1 is a schematic diagram illustrating an LTE architecture according to embodiments of the present invention;
FIG. 2 is a diagram illustrating a user plane protocol stack for use in the LTE architecture of FIG. 1;
FIG. 3 is a diagram illustrating a format of a semi-persistent resource allocation message for use in the resource allocation method according to an embodiment of the present invention;
FIG. 4 is a conceptual diagram illustrating a downlink data transmission using a resource allocation method in a mobile communication according to an embodiment of the present invention;
FIG. 5 is a flowchart illustrating a semi-persistent resource allocation procedure of a resource allocation method according to an embodiment of the present invention;
FIG. 6 is a flowchart illustrating a retransmission resource allocation procedure of the resource allocation method according to an embodiment of the present invention;
FIG. 7 is a flowchart illustrating a resource allocation message discrimination procedure of a resource allocation method according to an embodiment of the present invention;
FIG. 8 is a schematic block diagram illustrating a configuration of a mobile terminal according to an embodiment of the present invention; and
FIG. 9 is a schematic block diagram illustrating a configuration of a base station according to an embodiment of the present invention.

### DETAILED DESCRIPTION OF EMBODIMENTS

Embodiments of the present invention are described with reference to the accompanying drawings in detail. The same reference numbers are used throughout the drawings to refer to the same or like parts. Detailed descriptions of well-known functions and structures incorporated herein may be omitted to avoid obscuring the subject matter of the present invention.

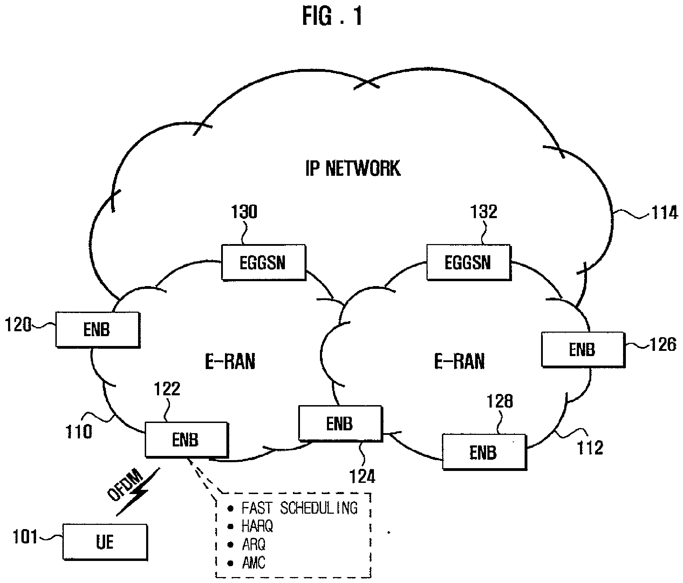

FIG. 1 is a schematic diagram illustrating an LTE architecture to which embodiments of the present invention are applicable.

As shown in FIG. 1, the LTE architecture is characterized with the Evolved Radio Access Network (E-RAN) 110 and 112 having only two infrastructure nodes: the Evolved Node B (hereinafter called ENB or Node B) 120, 122, 124, 126, and 128 and the Access Gateway (AG), i.e. Evolved Gateway GPRS Serving Nodes (EGGSNs) 130 and 132.

A User Equipment (UE) 101 accesses the Internet Protocol (IP) network via the E-RAN 110 and 112.

The ENBs 120, 122, 124, 126, and 128 correspond to the Node B of the UMTS system, which provides the UE 101 with radio access service. The ENBs 120, 122, 124, 126, and 128 are responsible for more complex functions than that of the conventional Node B. In the next generation wireless communication system, all user traffic including real time service such as Voice over IP (VoIP) are served through a shared channel. For this reason, there is a need for a device for managing status information of the UEs and scheduling according to the status information. Each of the ENBs 120, 122, 124, 126, and 128 is responsible for scheduling the UEs. In order to achieve a speed of 100 Mbps or faster, the wireless communication system uses radio access technology based on Orthogonal Frequency Division Multiplexing (OFDM) with a 20 MHz bandwidth. Adaptive Modulation and Coding (AMC) is also adopted for determining a modulation scheme and a channel coding rate according to the channel condition of the UE 101.

Hereinafter, the term "base station" is interchangeably used with "E-RAN" represented, in FIG. 1, by the E-RAN 110 (including the ENBs 120 and 122 and the EGGSN 130). The E-RAN 112 (including the ENBs 126 and 128 and the EGGSN 132) is also referred to as a "base station", and the term "mobile terminal" is interchangeably used with the term "UE", which is represented in FIG. 1 as the UE 101.

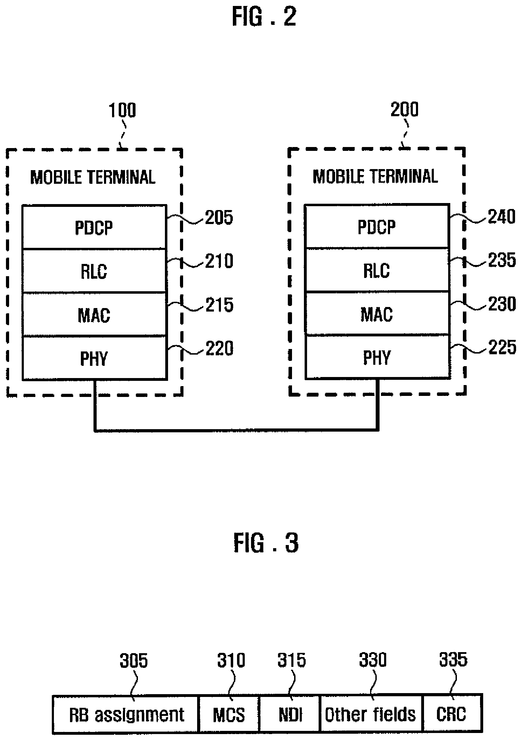

A protocol stack for use in the LTE architecture of FIG. 1 is described hereinafter. FIG. 2 is a diagram illustrating a user plane protocol stack for use in LTE architecture of FIG. 1.

As shown in FIG. 2, the mobile terminal 100 has a protocol stack composed of a Packet Data Convergence Protocol (PDCP) layer 205, a Radio Link Control (RLC) layer 210, a Media Access Control (MAC) layer 215, and a Physical (PHY) layer 220. Also, the base station 200 has a protocol stack composed a PDPC layer 240, a RLC layer 235, a MAC layer 230, and a PHY layer 225.

The PDCP layer 205 and 240 is responsible for IP header compression/decompression. The RLC layer 210 and 235 packs the PDCP Packet Data Units (PDUs) into a size appropriate for transmission and performs an Automatic Repeat reQuest (ARQ) function. The MAC layer 215 and 230 serves multiple RLC layer entities and multiplexes the RLC PDUs into a MAC PDU and de-multiplexes a MAC PDU into the RLC PDUs. The physical layer 220 and 225 performs encoding and modulation on the upper layer data to transmit through a radio channel and performs demodulation and decoding on the OFDM symbol received through radio channel to deliver to upper layers.

In the LTE system, HARQ is used to enhance data reliability. According to an embodiment of the present invention, one of the base station 200 and the UE can be a transmitter and the other of the base station 200 and the UE can be a receiver. When the receiver fails to receive a packet (e.g., a MAC PDU) transmitted by the transmitter, the receiver transmits a Negative ACLnowledge (NACK) and the transmitter, upon receiving the NACK, retransmits the packet. The receiver performs soft combining on the retransmitted packet and the previously received packet to improve data reliability.

In wireless communication according to an embodiment of the present invention, services can be provided in a completely IP-based and packet-based manner. For example, the voice communication service can be served as a packet-based service rather than circuit-switched service. In case of Voice over IP (VoIP), the traffic is characterized by small packet sizes with periodicity. For instance, when the VoIP service is provided in 12.2 Kbps Adaptive Multi-Rate (AMR) codec mode, VoIP packets having about 35-byte size are created every 20 msecs. Accordingly, in order to support the VoIP service with a normal scheduling scheme, the transmitter and receiver must exchange scheduling request messages and uplink resource allocation message whenever the VoIP packet is generated.

The base station 200 allocates semi-persistent resources to the mobile terminal 100 in order to reduce the control information overhead caused by the frequently transmitted scheduling requests and uplink resource allocation messages. This technique for reducing the control channel signaling by allocating semi-persistent resource is called Semi-Persistent resource Scheduling (SPS).

In case of normal resource allocation for the HARQ operation, the base station 200 transmits a resource allocation message whenever a packet to be transmitted is generated. However, when a semi-persistent resource (e.g., one or more resource blocks) is allocated for the HARQ operation, the resource is implicitly reused until a semi-persistent resource allocation message is transmitted. The mobile terminal 100 assumes a downlink transmission according to the semi-persistent resources that the UE has allocated and receives packets on the semi-persistent resources. Accordingly, the base station 200 does not need to transmit a semi-persistent resource allocation message when transmitting the packet using the semi-persistent resources allocated to the mobile terminal 100 but retransmission of the packet.

However, when the semi-persistent resource allocation message is missed, due to an unexpected reason, or decoded erroneously at the mobile terminal 100, and then a next semi-persistent resource allocation message is received successfully, the mobile terminal 100 cannot determine whether the currently received semi-persistent resource allocation message indicates a semi-persistent resource allocation (or reallocation), or determine whether the received semi-persistent resource allocation message indicates a resource allocation for retransmission of a packet using the semi-persistent resource.

According to embodiments of the present invention, the UE can determine whether a semi-persistent resource allocation message indicates a semi-persistent resource allocation or a resource allocation for retransmitting a packet using the semi-persistent resource. A message structure for use in the resource allocation method according to embodiments of the present invention is described hereinafter. FIG. 3 is a diagram illustrating a format of a semi-persistent resource allocation message for use in the resource allocation method according to an embodiment of the present invention.

Referring to FIG. 3, the semi-persistent resource allocation message includes a Resource Block (RB) assignment field 305, a Modulation and Coding Scheme (MCS) field 310, a New Data Indicator (NDI) field 315, and a Cyclic Redundancy Check (CRC) field 335. The reference numeral 330 denotes other fields, which may include a HARQ process number field. In order to avoid unnecessarily obscuring the present invention, detailed descriptions of the other fields are omitted.

The RB assignment field 305 contains the information on the amount and location of the resources assigned to the mobile terminal 100. The resource is allocated in units of Resource Blocks (RBs), which are 1 msec in duration, and consist of a predetermined number of subcarriers. At least one resource block is assigned is assigned by the RB assignment field 305. The at least one allocated resource block is a "transmission resource".

The MCS field contains information on the modulation level and channel coding rate adopted for transmission data. The MCS is 5 bits long and a code point represents a combination of a modulation scheme and channel coding rate. For instance, the MCS field 310 can indicate one of 32 code points including a pair a Quadrature Phase-Shift Keying (QPSK) (modulation scheme) and 0.11 (coding rate) to a 64 Quadrature Amplitude Modulation (QAM) and 0.95.

The NDI field 315 is 1 bit long and used for indicating whether the resource allocation message indicates a semi-persistent resource allocation or a retransmission of a packet that has not been transmitted (or received). In an embodiment of the present invention, the NDI is set to "0" to indicate the semi-persistent resource allocation, or set to "1" to indicate the resource allocation for retransmission of a packet using the semi-persistent resource.

The NDI field 315 contains information for identifying the semi-persistent resource allocation messages indicating semi-persistent resource allocation and resource allocation for retransmission of a packet using the semi-persistent resource. The UE can determine, based on the NDI value, whether the semi-persistent resource allocation message indicates a semi-persistent resource allocation or a resource allocation for retransmission of a packet, using the semi-persistent resource.

The NDI is a flag that is set to "0" for indicating semi-persistent resource allocation and set to "1" for indicating retransmission resource allocation. Although, according to an embodiment of the present invention, the NDI is defined as a flag for carrying "usage information" of the semi-persistent resource allocation message, the NDI is not limited thereto. For convenience, the terms "NDI value" and "NDI information" contained in the NDI field 315 are interchangeable with "usage information".

The CRC field 325 carries a CRC value calculated for the information contained in the resource allocation message and a SPS Cell Radio Network Temporary Identifier (SPS C-RNTI). The SPS C-RNTI is an identifier for the mobile terminal 100 for determining whether the semi-persistent resource allocation message is intended for the mobile terminal 100. Also, the SPS C-RNTI can be used for identifying the normal resource allocation message and the semi-persistent resource allocation message. Typically, the normal resource allocation message has a C-RNTI.

The base station 200 can transmit resource allocation messages for allocating resource to the mobile terminal 100. The resource allocation messages can be classified into "semi-persistent resource allocation messages" and "normal resource allocation messages". The mobile terminal 100 can identify semi-persistent resource allocation messages by a CRC calculation.

More specifically, the normal message and semi-persistent resource allocation message can be identified depending on whether the message carries a C-RNTI or a SPS C-RNTI. C-RNTIs are carried by normal messages, and SPS C-RNTIs are carried by semi-persistent resource allocation messages. SPS C-RNTIs have a value for identifying a specific mobile terminal 100. Accordingly, the base station 200 transmits an SPS C-RNTI to the mobile terminal 100 in a call establishment process.

When transmitting a semi-persistent resource allocation message to the mobile terminal 100, the base station 200 applies an SPS C-RNTI masking to the semi-persistent resource allocation message, performs a CRC calculation, and inserts the calculation result into the CRC field 525.

If the semi-persistent resource allocation message is received, the mobile terminal 100 applies a masking of the SPS C-RNTI received in the call establishment process to the received semi-persistent resource allocation message and performs CRC. If the CRC result matches the result calculated previously, the mobile terminal 100 determines that the semi-persistent resource allocation message intended for the mobile terminal 100 has been successfully received. This means that the semi-persistent resource allocation message has passed the CRC test.

Once a message passes the CRC test with the C-RNTI, the mobile terminal 100 determines that a normal message intended for the mobile terminal 100 has been successfully received.

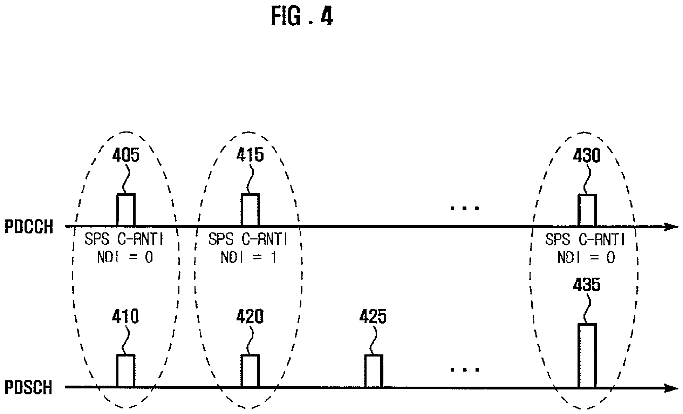

The resource allocation method using a semi-persistent resource allocation message is described hereinafter in more detail. FIG. 4 is a conceptual diagram illustrating a downlink data transmission using a resource allocation method in a mobile communication according to an embodiment of the present invention.

As shown in FIG. 4, a Physical Downlink Control Channel (PDCCH) and a Physical Downlink Shared Channel (PDSCH) are used for downlink transmission. The base station 200 transmits the semi-persistent resource allocation message on the PDCCH and data on the PDSCH. The mobile terminal 100 locates the semi-persistent resource based on the RB assignment information indicated by the semi-persistent resource allocation message. and the mobile terminal 100 further receives the packets by decoding the semi-persistent resource located on the PDSCH according to the MCS indicated by the semi-persistent resource allocation message. In FIG. 4, reference numbers 405, 415, and 430 denote semi-persistent resource allocation messages, and reference numbers 410, 420, 425, and 435 denote packets.

The base station 200 transmits a semi-persistent resource allocation message 405 at a time point for assigning a semi-persistent resource to the mobile terminal 100.

The base station 200 inserts a CRC calculation result into the CRC field 335 of the semi-persistent resource allocation message 405. The CRC calculation is performed with the SPS C-RNTI of the mobile terminal 100. The base station 200 also sets the NDI value contained in the NDI field 315 to "0."

If the semi-persistent resource allocation message 405 is received, the mobile terminal 100 verifies the semi-persistent resource allocation message 405 by referencing the NDI value, which is set to "0." The mobile terminal 100 locates the semi-persistent resource on the PDSCH and receives the packets 410 and 425 transmitted periodically in the semi-persistent resource that the mobile terminal 100 has been assigned.

The mobile terminal 100 performs CRC test on every packet. In FIG. 4 it is assumed that the first packet 410 fails the CRC test. In this case, the mobile terminal 100 transmits a HARQ NACK to the base station 200.

Upon receiving of the HARQ NACK, the base station 200 retransmits the erroneous packet using the semi-persistent resource assigned to the mobile terminal 100. The base station 200 generates a semi-persistent resource allocation message 415 having a CRC containing the CRC result calculated with the SPS C-RNTI of the mobile terminal 100 and NDI set to "1," which indicates that the retransmission resource allocation uses the semi-persistent resource.

If the semi-persistent resource allocation message 415 is received, then the mobile terminal 100 verifies the semi-persistent resource allocation message intended for the mobile terminal 100 based on the result of the CRC test, and checks the NDI field 315 of the semi-persistent resource allocation message. The mobile terminal 100 determines, by referencing to the NDI set to "1," that the semi-persistent resource allocation message 415 indicates that the retransmission resource allocation uses the semi-persistent resource. Once it is determined that the semi-persistent resource allocation message 415 indicates retransmission resource allocation, the mobile terminal 100 locates the retransmission resource based on the RB assignment information contained in the RB assignment field of the semi-persistent resource allocation message 415 and receives the retransmitted packet 420 in the retransmission resource. Next, the mobile terminal 100 performs HARQ soft while combining the retransmitted packet 420 with the previously received packet 410.

If the base station 200 changes the semi-persistent resource assigned to the mobile terminal 100, the base station 200 transmits a semi-persistent resource allocation message 430 indicating a semi-persistent resource allocation to the mobile terminal 100.

The semi-persistent resource allocation message 430 includes CRC field 335 containing a CRC result calculated with the SPS C-RNTI of the mobile terminal 100 and the NDI field 315 containing NDI value set to "0," in order to indicate that the semi-persistent resource allocation message indicates the semi-persistent resource allocation.

If the semi-persistent resource allocation message 430 is received, then the mobile terminal 100 verifies the semi-persistent resource allocation message according to the positive result of the CRC test and determines, by referencing the NDI value that is set to "0," that the semi-persistent resource allocation message indicates the semi-persistent resource allocation. Accordingly, the mobile terminal 100 locates the semi-persistent resource indicated by the RB assignment information contained in the RB assignment field of the semi-persistent resource allocation message and receives the first packets 435 transmitted periodically in the semi-persistent resource allocated to the mobile terminal 100.

As described above, the mobile terminal can discriminate the semi-persistent resource allocation messages indicating retransmission resource allocation and semi-persistent resource allocation accurately, based on the value of the NDI contained in the NDI field 315 of the semi-persistent resource allocation message.

Since the semi-persistent resource allocation messages indicate retransmission resource allocation and semi-persistent resource allocation can be determined with the NDI value, the resource allocation method negates the need for supplementary information such as "NDI_LATEST" that is updated for indicating whether the packet is a first packet or a retransmitted packet, in which enhances signaling reliability and system efficiency.

The resource allocation method of the present invention is described hereinafter in more detail. As described above, the semi-persistent resource allocation message can be used for allocating a semi-persistent resource and a retransmission resource using the semi-persistent resource to the mobile terminal 100.

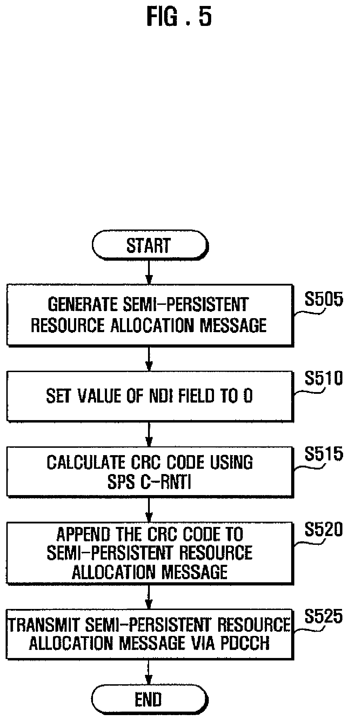

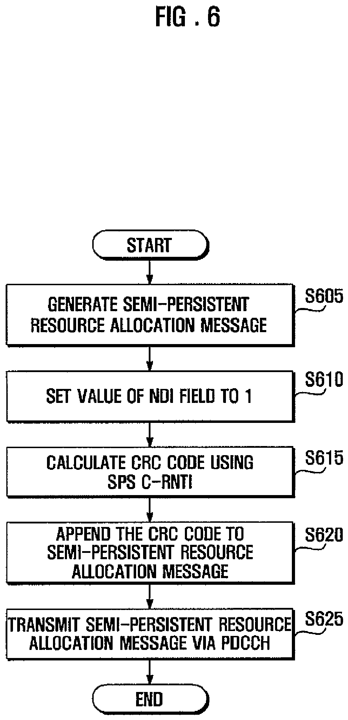

FIG. 5 is a flowchart illustrating a semi-persistent resource allocation procedure of a resource allocation method according to an embodiment of the present invention, and FIG. 6 is a flowchart illustrating a retransmission resource allocation procedure of the resource allocation method according to an embodiment of the present invention.

According to an embodiment of the present invention, the base station determines whether to transmit a semi-persistent resource allocation message indicating a semi-persistent resource allocation or a semi-persistent resource allocation message indicative of retransmission resource allocation using the semi-persistent resource.

When transmitting the semi-persistent resource allocation message indicating a semi-persistent resource allocation, the base station performs the semi-persistent resource allocation procedure depicted in FIG. 5. Otherwise, when transmitting the semi-persistent resource allocation message indicating a retransmission resource allocation using the semi-persistent resource, the base station performs the retransmission resource allocation procedure depicted in FIG. 6.

Referring to FIG. 5, in order to allocate a semi-persistent resource, the base station 200 first creates a semi-persistent resource allocation message based on the information on the semi-persistent resource to be allocated to the mobile terminal 100, in step 505. Here, the information on the semi-persistent resource assigned to the mobile terminal 100 is specified in the RB assignment field 305 of the semi-persistent resource allocation message.

Next, the base station 200 sets the NDI value contained in the NDI field 315 of the semi-persistent resource message to "0," in step 510.

Next, the base station 200 calculates a CRC code with the SPS C-RNTI of the mobile terminal 100, in step 515. The CRC code calculated with the SPS C-RNTI can be used to identify the normal resource allocation message and the semi-persistent resource allocation message.

Next, the base station 200 inserts the CRC code into the CRC field 335 of the semi-persistent resource allocation message, in step 520.

Consequently, the base station 200 transmits the semi-persistent resource allocation message to the mobile terminal 100 via a PDCCH.

As described above with reference to FIG. 5, the base station 200 sets the NDI value contained in the NDI field 315 of the semi-persistent resource allocation message to "0," so as to inform the mobile terminal 100 that semi-persistent resource allocation message is indicative of semi-persistent resource allocation.

A procedure for allocating a retransmission resource using the semi-persistent resource allocated to the mobile terminal 100 is described hereinafter with reference to FIG. 6.

When a HARQ NACK message is received, the base station allocates a retransmission resource for retransmitting the packet indicated by the HARQ NACK message.

Referring to FIG. 6, in order to allocate a retransmission resource using the semi-persistent resource allocated to the mobile terminal 100, the base station 200 creates a semi-persistent resource allocation message based on the information on the retransmission resource to be allocated to the mobile terminal 100, in step 650. Here, the information on the retransmission resource assigned to the mobile terminal 100 is specified in the RB assignment field 305 of the semi-persistent resource allocation message.

Next, the base station 200 sets the NDI value contained in the NDI field 315 of the semi-persistent resource allocation message to "1," in step 610.

Next, the base station 200 calculates a CRC code with the SPS C-RNTI of the mobile terminal 100, in step 615. The CRC code calculated with the SPS C-RNTI allows the mobile terminal 100 to distinguish the semi-persistent resource allocation message from the normal resource allocation message.

Next, the base station 200 inserts the CRC code into the CRC field 335 of the semi-persistent resource allocation message, in step 620.

Consequently, the base station 200 transmits the semi-persistent resource allocation message to the mobile terminal 100 via a PDCCH.

As described above with reference to FIG. 6, the base station 200 sets the NDI value contained in the NDI field 315 of the semi-persistent resource allocation message to "1," so as to inform the mobile terminal 100 that semi-persistent resource allocation message indicates a retransmission resource allocation.

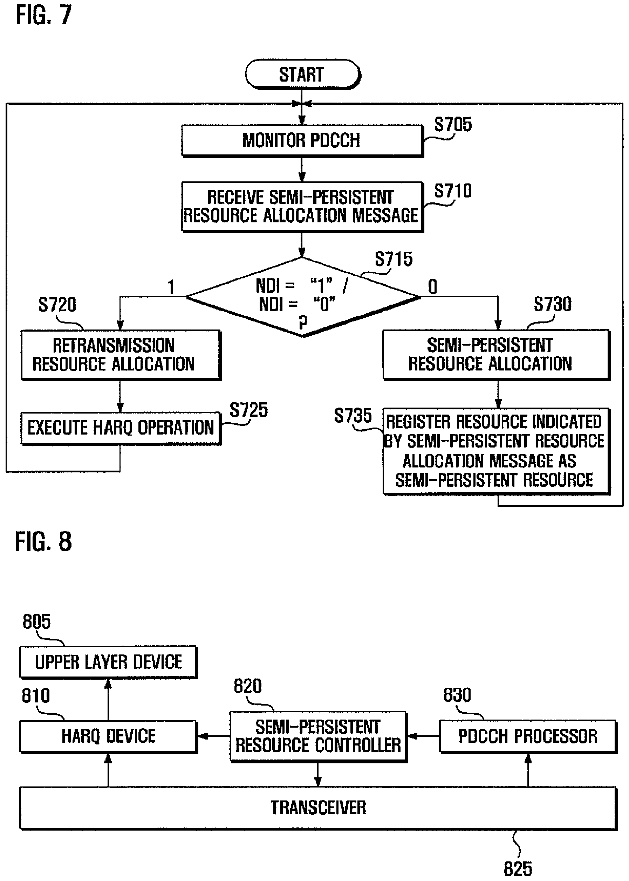

The operations of the mobile terminal 100 received the semi-persistent resource allocation message are described hereinafter in detail. FIG. 7 is a flowchart illustrating a resource allocation message discrimination procedure of a resource allocation method according to an embodiment of the present invention.

In FIG. 7, it is assumed that the mobile terminal 100 has received a C-RNTI and a SPS C-RNTI in the call establishment procedure with the base station 200.

Referring to FIG. 7, the mobile terminal 100 monitors the PDCCH, in step 705. When a downlink message is received on the PDCCH, the mobile terminal 100 calculates the CRC code with the C-RNTI and SPS C-RNTI and compares the calculated CRC code with the one received from the base station to determine whether the message is intended for the mobile terminal 100.

At this time, the mobile terminal 100 determines whether the message is a normal resource allocation message or a semi-persistent resource allocation message according to whether the message has passed the CRC test with the C-RNTI or the SPS C-RNTI. In FIG. 7, it is assumed that the message has passed the CRC test with the SPS C-RNTI. This means the received message is a semi-persistent resource allocation message. The mobile terminal 100 receives the semi-persistent resource allocation message, in step 710, and checks the NDI field of the semi-persistent resource allocation message to determine whether the semi-persistent resource allocation message indicates a semi-persistent resource allocation or a retransmission resource allocation, in step 715.

As described above, the CRC calculation is performed on the received message with a masking of the SPS C-RNTI of the mobile station 100. If the CRC code obtained from the CRC calculation is compared with the CRC code received from the base station, the CRC success.

If the NDI value is set to "1" in step 715, the mobile terminal 100 determines that the semi-persistent resource allocation message indicates a retransmission resource allocation, in step 720. Otherwise, if the NDI value is set to "0," the mobile terminal 100 determines that the semi-persistent resource allocation message indicates a semi-persistent resource allocation, in step 730.

If it is determined that the semi-persistent resource allocation message indicates a retransmission resource allocation, the mobile terminal 100 receives the packet retransmitted in the resource of the PDSCH that is indicated by the RB assignment information of the semi-persistent resource allocation message, and soft-combines the packet stored in the HARQ buffer with the retransmitted packet in the HARQ process.

Otherwise, if it is determined that the semi-persistent resource allocation message indicates a semi-persistent resource allocation, the mobile terminal 100 locates the semi-persistent resource indicated by the semi-persistent resource allocation message. The mobile terminal 100 checks the information contained the RB assignment field 305 of the semi-persistent resource allocation message indicating the semi-persistent resource allocation and registers the resource indicated by the RB assignment information as the semi-persistent resource allocated to the mobile terminal 100. When a semi-persistent resource was previously allocated, the mobile terminal 100 changes the previous semi-persistent resource to the newly allocated semi-persistent resource.

A structure of a mobile terminal 100 for implementing the above described resource allocation method is described hereinafter. FIG. 8 is a schematic block diagram illustrating a configuration of a mobile terminal according to an embodiment of the present invention.

Referring to FIG. 8, the mobile terminal 100 according to an embodiment of the present invention includes an upper layer device 805, an HARQ device 810, an SPS resource controller 820, a transceiver 825, and a PDCCH processor 830.

The transceiver 825 is responsible for transmitting and receiving radio signal carrying data. Particularly, the transceiver 825 receives data (control information) through the PDCCH. Once the data is received through the PDCCH, the transceiver 825 decodes the resource allocated to the mobile terminal on the PDCCH into data and delivers the decoded data to the PDCCH processor 830. Here, the data includes a semi-persistent resource allocation message.

Once the decoded data is delivered from the transceiver 825, the PDCCH processor 830 performs a CRC test on the semi-persistent resource allocation message with a masking of the SPS C-RNTI of the mobile terminal. The SPS C-RNTI is a dynamic UE identifier allocated by a serving base station. According to an embodiment of the present invention, the SPS C-RNTI is also used for determining whether the message message is a normal resource allocation message or a semi-persistent resource allocation message. If the data passes the CRC test with the SPS C-RNTI, the PDCCH processor determines that the data is a semi-persistent resource allocation message intended for the mobile terminal 100, and sends the semi-persistent resource allocation message to the SPS resource controller 820.

The SPS resource controller 820 checks the NDI field 315 of the semi-persistent resource allocation message received from the PDCCH processor 830 and determines whether the semi-persistent resource allocation message indicates a semi-persistent resource allocation or a retransmission resource allocation on the basis of the NDI value contained in the NDI field 315.

For instance, if the NDI value is set to "1," the SPS resource controller 820 determines that the semi-persistent resource allocation message indicates a retransmission resource allocation. In this case, the SPS resource controller 820 controls the HARQ device 810 to combine the packet received in the resource allocated on the PDSCH by the semi-persistent resource allocation message indicative of retransmission resource allocation with the previously received packet stored in the HARQ buffer.

Otherwise, if the NDI value is set to "0," the SPS resource controller 820 determines that the semi-persistent resource allocation message indicates a semi-persistent resource allocation. In this case, SPS resource controller 820 registers the semi-persistent resource indicated by the semi-persistent resource allocation message. The mobile terminal 100 locates the semi-persistent resource indicated by the RB assignment field 305 of the semi-persistent resource allocation message and decodes the semi-persistent resources on the PDSCH(s), since the semi-persistent resource allocation message has been received. When the semi-persistent resource has been previously allocated, the SPS resource controller 820 replaces the previously allocated semi-persistent resource with the newly allocated semi-persistent resource. Accordingly, the mobile terminal decodes the newly allocates semi-persistent resource on the PDSCH(s) to receive packets.

The HARQ device 810 includes a plurality of HARQ processors that are operating in individual HARQ processes, respectively. Each HARQ processor performs HARQ operations to request retransmission of packet and soft combining on the retransmitted packet and the previously received packet stored in the corresponding HARQ buffer.

The upper layer device 805 includes at least one of Radio Link Control (RLC) device, Packet Data Convergence Protocol (PDCP) device, and Media Access Control (MAC) device. The PDCP device is responsible for compressing/decompressing IP header, the RLC device formats the PDCP PDUs in size appropriate for transporting, and the MAC device multiplexes and demultiplexes MAC PDUs.

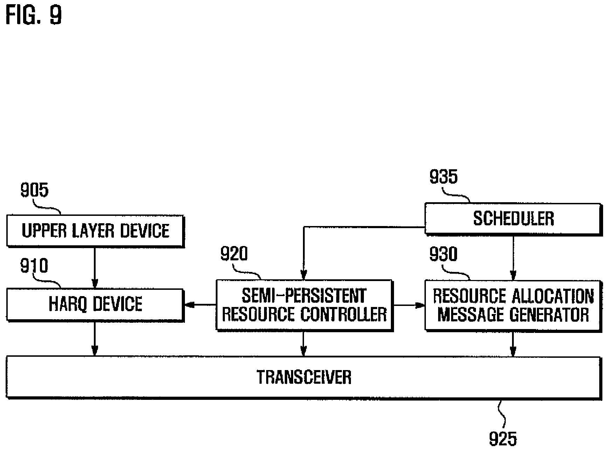

A structure of a base station 200 for preferably implementing the above described resource allocation method is described hereinafter with reference to FIG. 9. FIG. 9 is a schematic block diagram illustrating a configuration of a base station according to an embodiment of the present invention.

The base station according to an embodiment of the present invention includes an upper layer device 905, an HARQ device 910, a transceiver 925, an SPS resource controller 920, resource allocation message generator 930, and a scheduler 935.

The transceiver 925 is responsible for transmitting and receiving radio signal carrying data. Particularly, the transceiver 925 transmits data (control information) on the PDCCH. The data include a semi-persistent resource allocation message.

The resource allocation message generator 930 generates a semi-persistent resource allocation message and delivers the semi-persistent resource allocation message to the transceiver 925 under the control of the scheduler 935 and the SPS resource controller 920.

The scheduler 935 allocates resources to the mobile terminal 100 in consideration of the amount, type, and usage of the data to be transmitted to the mobile terminal 100. Particularly, according to the embodiment of the present invention illustrated in FIG. 9, the scheduler 935 can allocate resources to mobile terminals in normal resource scheduling manner and semi-persistent resource scheduling manner. The scheduler 935 controls the resource allocation message generator 930 to generate a resource allocation message according to the types of identifiers and the usages of the resources to be allocated to the mobile terminals. When the semi-persistent resource allocation or the retransmission resource allocation using the semi-persistent resource is required, the scheduler 935 notifies the semi-persistent resource controller 920.

If the scheduler 935 issues a notice of a semi-persistent resource allocation, the semi-persistent resource controller 920 controls the resource allocation message generator 930 to set the NDI value contained in the NDI field 315 of the semi-persistent resource allocation message to "0." The semi-persistent resource controller 920 also controls the transceiver 925 to transmit the packet using the semi-persistent resource allocated to the mobile terminal 100 on the PDSCH.

If the scheduler 935 issues a notice of a retransmission resource allocation using the semi-persistent resource, the semi-persistent resource controller 920 controls the resource allocation message generator 930 to set the NDI value contained in the NDI field 315 of the semi-persistent resource allocation message to "1." The semi-persistent resource controller 920 also controls the transceiver 925 to retransmit the packet requested by the mobile terminal using the semi-persistent resource allocated on the PDSCH.

The semi-persistent resource controller 920 controls the resource allocation message generator 930 to set the NDI carried by the semi-persistent resource allocation message to "0" or "1," according to whether the resource allocation is a semi-persistent resource allocation or a retransmission resource allocation using the semi-persistent resource.

The semi-persistent resource controller 920 calculates a CRC code with the SPS C-RNTI of the mobile terminal to allocate the semi-persistent resource and inserts the calculated CRC code into the CRC field 335.

The HARQ device 910 includes a plurality of HARQ processors that are operating in individual HARQ processes, respectively. Each HARQ processor performs HARQ operations to request retransmission of a packet and soft combining on the retransmitted packet and the previously received packet stored in the corresponding HARQ buffer.

The upper layer device 905 includes at least one of Radio Link Control (RLC) device, Packet Data Convergence Protocol (PDCP) device, and Media Access Control (MAC) device. The PDCP device is responsible for compressing/decompressing IP header, the RLC device formats the PDCP PDUs in size appropriate for transporting, and the MAC device multiplexes and demultiplexes MAC PDUs.

As described above, the resource allocation method for a wireless communication system according to the present invention uses a semi-persistent resource allocation message having usage information that indicates whether the semi-persistent resource allocation message is indicative of semi-persistent resource allocation or retransmission resource allocation using the semi-persistent resource, thereby enhancing the reliability of retransmission using the semi-persistent resource. Also, the resource allocation method of the present invention enables the mobile terminal to check the resource allocation for retransmission without recording the status of packet, thereby reducing processing complexity of the mobile terminal.

Although embodiments of the present invention have been described in detail hereinabove, it should be clearly understood that many variations and/or modifications of the basic inventive concepts herein taught which may appear to those skilled in the present art will still fall within the scope of the present invention, as defined in the appended claims.

## Claims

1. A resource allocation method for a mobile terminal in a wireless communication system, comprising:
receiving a Semi-Persistent Scheduling Cell Radio Network Temporary Identifier, SPS C-RNTI,
determining that a control message associated with the SPS C-RNTI is received, the control message comprising resource allocation information and a New Data Indicator, NDI;
receiving a new data packet transmitted from a base station via a resource indicated by the resource allocation information if the control message associated with the SPS C-RNTI is received and the NDI is equal to 0; and
receiving a retransmission data packet transmitted from the base station via a resource indicated by the resource allocation information if the control message associated with the SPS C-RNTI is received and the NDI is equal to 1, and
wherein a resource allocation is changed from a resource which is previously allocated to the resource indicated by the resource allocation information, if the resource indicated by another resource allocation information is previously allocated and the NDI is equal to 0.

2. The resource allocation method of claim 1, wherein the resource allocation is a semi-persistent resource allocation.

3. The resource allocation method of claim 1, wherein the control message associated with the SPS C-RNTI comprises a cyclical redundancy check, CRC, masked by the SPS C-RNTI.

4. The resource allocation method of claim 1, wherein the new data packet is received periodically via the resource indicated by the resource allocation information, if the control message associated with the SPS C-RNTI is received and the NDI is equal to 0.

5. The resource allocation method of claim 1, wherein the retransmission data packet is received once via the resource indicated by the resource allocation information, if the control message associated with the SPS C-RNTI is received and the NDI is equal to 1.

6. A resource allocation method for a base station in a wireless communication system, comprising:
transmitting a Semi-Persistent Scheduling Cell Radio Network Temporary Identifier, SPS C-RNTI, to a terminal;
transmitting a control message associated with the SPS C-RNTI to the terminal, the control message comprising resource allocation information and a New Data Indicator, NDI;
transmitting a new data packet transmitted to the terminal via a resource indicated by the resource allocation information if the transmitted NDI is equal to 0; and
transmitting a retransmission data packet to the terminal via a resource indicated by the resource allocation information if the transmitted NDI is equal to 1, and
wherein a resource allocation is changed from a resource which is previously allocated to the resource indicated by the resource allocation information, if the resource indicated by another resource allocation information is previously allocated and the NDI is equal to 0.

7. The resource allocation method of claim 6, wherein the resource allocation is a semi-persistent resource allocation.

8. The resource allocation method of claims 6, wherein the control message associated with the SPS C-RNTI comprises a cyclical redundancy check, CRC, masked by the SPS C-RNTI.

9. The resource allocation method of claims 6, wherein the new data packet is transmitted periodically via the resource indicated by the resource allocation information, if the transmitted NDI is equal to 0.

10. The resource allocation method of claims 6, wherein the retransmission data packet is transmitted once via the resource indicated by the resource allocation information, if the transmitted NDI is equal to 1.

11. A resource allocation apparatus of a mobile terminal in a wireless communication system, comprising:
a transceiver for transmitting and receiving data; and
a controller for controlling the transceiver to receive a Semi-Persistent Scheduling Cell Radio Network Temporary Identifier, SPS C-RNTI; to determine that a control message associated with the SPS C-RNTI is received, the control message comprising resource allocation information and a New Data Indicator, NDI; to receive a new data packet transmitted from a base station via a resource indicated by the resource allocation information if the control message associated with the SPS C-RNTI is received and the NDI is equal to 0; and to receive a retransmission data packet transmitted from the base station via a resource indicated by the resource allocation information if the control message associated with the SPS C-RNTI is received and the NDI is equal to 1, and
wherein a resource allocation is changed from a resource which is previously allocated to the resource indicated by the resource allocation information, if the resource indicated by another resource allocation information is previously allocated and the NDI is equal to 0.

12. The resource allocation apparatus of claim 11, wherein the resource allocation is a semi-persistent resource allocation.

13. The resource allocation apparatus of claim 11, wherein the control message associated with the SPS C-RNTI comprises a cyclical redundancy check, CRC, masked by the SPS C-RNTI.

14. The resource allocation apparatus of claim 11, wherein the new data packet is received periodically via the resource indicated by the resource allocation information, if the control message associated with the SPS C-RNTI is received and the NDI is equal to 0.

15. The resource allocation apparatus of claim 15, wherein the retransmission data packet is received once via the resource indicated by the resource allocation information. if the control message associated with the SPS C-RNTI is received and the NDI is equal to 1.

16. A resource allocation apparatus of a base station in a wireless communication system, comprising:
a transceiver for transmitting and receiving data; and
a controller for controlling the transceiver to transmit a Semi-Persistent Scheduling Cell Radio Network Temporary Identifier, SPS C-RNTI, to a terminal; to transmit a control message associated with the SPS C-RNTI to the terminal, the control message comprising resource allocation information and a New Data Indicator, NDI; to transmit a new data packet transmitted to the terminal via a resource indicated by the resource allocation information if the transmitted NDI is equal to 0; and to transmit a retransmission data packet to the terminal via a resource indicated by the resource allocation information if the transmitted NDI is equal to 1, and
wherein a resource allocation is changed from a resource which is previously allocated to the resource indicated by the resource allocation information, if the resource indicated by another resource allocation information is previously allocated and the NDI is equal to 0.

17. The resource allocation apparatus of claim 16, wherein the resource allocation is a semi-persistent resource allocation.

18. The resource allocation apparatus of claim 16, wherein the control message associated with the SPS C-RNTI comprises a cyclical redundancy check, CRC, masked by the SPS C-RNTI.

19. The resource allocation apparatus of claim 16, wherein the new data packet is transmitted periodically via the resource indicated by the resource allocation information, if the transmitted NDI is equal to 0.

20. The resource allocation apparatus of claim 16, wherein the retransmission data packet is transmitted once via the resource indicated by the resource allocation information, if the transmitted NDI is equal to 1.

## Patentansprüche

1. Ein Ressource-Allokations-Verfahren für ein Mobilterminal in einem drahtlosen Kommunikationssystem, umfassend:
Empfangen eines Semi-Persistent Scheduling Cell Radio Network Temporary Identifier, SPS C-RNTI,
Bestimmen, dass eine Steuernachricht, die mit dem SPS C-RNTI assoziiert ist, empfangen wird, wobei die Steuernachricht Ressource-Allokations-Informationen und einen New Data Indicator, NDI, enthält;
Empfangen eines neuen Datenpakets, das von einer Basisstation über eine Ressource übertragen wird, die von den Ressource-Allokations-Informationen angezeigt wird, wenn die Steuernachricht, die mit dem SPS C-RNTI assoziiert ist, empfangen wird und der NDI gleich 0 ist; und
Empfangen eines Wiederübertragungs-Datenpakets, das von der Basisstation über eine Ressource übertragen wird, die von den Ressource-Allokations-Informationen angezeigt wird, wenn die Steuernachricht, die mit dem SPS C-RNTI assoziiert ist, empfangen wird und der NDI gleich 1 ist, und
wobei eine Ressource-Allokation von einer Ressource, die zuvor alloziert wird, zu der Ressource, die durch die Ressource-Allokations-Informationen angezeigt wird, geändert wird, wenn die Ressource, die durch weitere Ressource-Allokations-Informationen angezeigt wird, zuvor alloziert wird und der NDI gleich 0 ist.

2. Das Ressource-Allokations-Verfahren von Anspruch 1, in dem die Ressource-Allokation eine semi-persistente Ressource-Allokation ist.

3. Das Ressource-Allokations-Verfahren von Anspruch 1, in dem die Steuernachricht, die mit dem SPS C-RNTI assoziiert ist, einen Cyclical Redundancy Check, CRC, umfasst, der durch den SPS C-RNTI maskiert ist.

4. Das Ressource-Allokations-Verfahren von Anspruch 1, in dem das neue Datenpaket periodisch über die Ressource empfangen wird, die durch die Ressource-Allokations-Informationen angezeigt wird, wenn die Steuernachricht, die mit dem SPS C-RNTI assoziiert ist, empfangen wird und der NDI gleich 0 ist.

5. Das Ressource-Allokations-Verfahren von Anspruch 1, in dem das Wiederübertragungs-Datenpaket einmal über die Ressource empfangen wird, die durch die Ressource-Allokations-Informationen angezeigt wird, wenn die Steuernachricht, die mit dem SPS C-RNTI assoziiert ist, empfangen wird und der NDI gleich 1 ist.

6. Ein Ressource-Allokations-Verfahren für eine Basisstation in einem drahtlosen Kommunikationssystem, umfassend:
Übertragen eines Semi-Persistent Scheduling Cell Radio Network Temporary Identifier, SPS C-RNTI, an ein Terminal;
Übertragen einer Steuernachricht, die mit dem SPS C-RNTI assoziiert ist, an das Terminal, wobei die Steuernachricht Ressource-Allokations-Informationen und einen New Data Indicator, NDI, enthält;
Übertragen eines neuen Datenpakets, das zu dem Terminal über eine Ressource übertragen wird, die von den Ressource-Allokations-Informationen angezeigt wird, wenn der übertragene NDI gleich 0 ist; und
Übertragen eines Wiederübertragungs-Datenpakets an das Terminal über eine Ressource, die von den Ressource-Allokations-Informationen angezeigt wird, wenn der übertragene NDI gleich 1 ist, und
wobei eine Ressource-Allokation von einer Ressource, die zuvor alloziert wird, zu der Ressource, die durch die Ressource-Allokations-Informationen angezeigt wird, geändert wird, wenn die Ressource, die durch weitere Ressource-Allokations-Informationen angezeigt wird, zuvor alloziert wird und der NDI gleich 0 ist.

7. Das Ressource-Allokations-Verfahren von Anspruch 6, in dem die Ressource-Allokation eine semi-persistente Ressource-Allokation ist.

8. Das Ressource-Allokations-Verfahren von Anspruch 6, in dem die Steuernachricht, die mit dem SPS C-RNTI assoziiert ist, einen Cyclical Redundancy Check, CRC, umfasst, der durch den SPS C-RNTI maskiert ist.

9. Das Ressource-Allokations-Verfahren von Anspruch 6, in dem das neue Datenpaket periodisch über die Ressource übertragen wird, die durch die Ressource-Allokations-Informationen angezeigt wird, und der übertragene NDI gleich 0 ist.

10. Das Ressource-Allokations-Verfahren von Anspruch 6, in dem das Wiederübertragungs-Datenpaket einmal über die Ressource übertragen wird, die durch die Ressource-Allokations-Informationen angezeigt wird, wenn der übertragene NDI gleich 1 ist.

11. Eine Ressource-Allokations-Vorrichtung eines Mobilterminals in einem drahtlosen Kommunikationssystem, umfassend:
einen Transceiver zum Übertragen und Empfangen von Daten; und
einen Kontroller zum Steuern des Transceivers, um einen Semi-Persistent Scheduling Cell Radio Network Temporary Identifier, SPS C-RNTI, zu empfangen;
um zu bestimmen, dass eine Steuernachricht, die mit dem SPS C-RNTI assoziiert ist, empfangen wird, wobei die Steuernachricht Ressource-Allokations-Informationen und einen New Data Indicator, NDI, enthält;
um ein neues Datenpaket, das von einer Basisstation über eine Ressource übertragen wird, die von den Ressource-Allokations-Informationen angezeigt wird, zu empfangen, wenn die Steuernachricht, die mit dem SPS C-RNTI assoziiert ist, empfangen wird und der NDI gleich 0 ist; und
um ein Wiederübertragungs-Datenpaket, das von der Basisstation über eine Ressource übertragen wird, die von den Ressource-Allokations-Informationen angezeigt wird, zu empfangen, wenn die Steuernachricht, die mit dem SPS C-RNTI assoziiert ist, empfangen wird und der NDI gleich 1 ist, und
wobei eine Ressource-Allokation von einer Ressource, die zuvor alloziert wird, zu der Ressource, die durch die Ressource-Allokations-Informationen angezeigt wird, geändert wird, wenn die Ressource, die durch weitere Ressource-Allokations-Informationen angezeigt wird, zuvor alloziert wird und der NDI gleich 0 ist.

12. Die Ressource-Allokations-Vorrichtung von Anspruch 11, wobei die Ressource-Allokation eine semi-persistente Ressource-Allokation ist.

13. Die Ressource-Allokations-Vorrichtung von Anspruch 11, wobei die Steuernachricht, die mit dem SPS C-RNTI assoziiert ist, einen Cyclical Redundancy Check, CRC, umfasst, der durch den SPS C-RNTI maskiert ist.

14. Die Ressource-Allokations-Vorrichtung von Anspruch 11, in der das neue Datenpaket periodisch über die Ressource empfangen wird, die durch die Ressource-Allokations-Informationen angezeigt wird, wenn die Steuernachricht, die mit dem SPS C-RNTI assoziiert ist, empfangen wird und der NDI gleich 0 ist.

15. Die Ressource-Allokations-Vorrichtung von Anspruch 14, in der das Wiederübertragungs-Datenpaket einmal über die Ressource empfangen wird, die durch die Ressource-Allokations-Informationen angezeigt wird, wenn die Steuernachricht, die mit dem SPS C-RNTI assoziiert ist, empfangen wird und der NDI gleich 1 ist.

16. Eine Ressource-Allokations-Vorrichtung einer Basisstation in einem drahtlosen Kommunikationssystem, umfassend:
einen Transceiver zum Übertragen und Empfangen von Daten; und
einen Kontroller zum Steuern des Transceivers, um einen Semi-Persistent Scheduling Cell Radio Network Temporary Identifier, SPS C-RNTI, zu übertragen;
um eine Steuernachricht, die mit dem SPS C-RNTI assoziiert ist, an das Terminal zu übertragen, wobei die Steuernachricht Ressource-Allokations-Informationen und einen New Data Indicator, NDI, enthält;
um ein neues Datenpaket zu übertragen, das an das Terminal über eine Ressource übertragen wird, die von den Ressource-Allokations-Informationen angezeigt wird, wenn der übertragene NDI gleich 0 ist; und
um ein Wiederübertragungs-Datenpaket an das über eine Ressource zu übertragen, die von den Ressource-Allokations-Informationen angezeigt wird, der übertragene NDI gleich 1 ist, und
wobei eine Ressource-Allokation von einer Ressource, die zuvor alloziert wird, zu der Ressource, die durch die Ressource-Allokations-Informationen angezeigt wird, geändert wird, wenn die Ressource, die durch weitere Ressource-Allokations-Informationen angezeigt wird, zuvor alloziert wird und der NDI gleich 0 ist.

17. Die Ressource-Allokations-Vorrichtung von Anspruch 16, wobei die Ressource-Allokation eine semi-persistente Ressource-Allokation ist.

18. Die Ressource-Allokations-Vorrichtung von Anspruch 16, wobei die Steuernachricht, die mit dem SPS C-RNTI assoziiert ist, einen Cyclical Redundancy Check, CRC, umfasst, der durch den SPS C-RNTI maskiert ist.

19. Die Ressource-Allokations-Vorrichtung von Anspruch 16, in der das neue Datenpaket periodisch über die Ressource übertragen wird, die durch die Ressource-Allokations-Informationen angezeigt wird, wenn der übertragene NDI gleich 0 ist.

20. Die Ressource-Allokations-Vorrichtung von Anspruch 16, in der das Wiederübertragungs-Datenpaket einmal über die Ressource übertragen wird, die durch die Ressource-Allokations-Informationen angezeigt wird, wenn der übertragene NDI gleich 1 ist.

## Revendications

1. Procédé d'attribution de ressources pour un terminal mobile dans un système de communication sans fil, consistant à :
recevoir un identifiant temporaire de réseau radio cellulaire à programmation semi-persistante SPS C-RNTI ;
déterminer qu'un message de commande associé au SPS C-RNTI est reçu, lequel message de commande comprend des informations d'attribution de ressources et un nouvel indicateur de données NDI ;
recevoir un nouveau paquet de données transmis depuis une station de base via une ressource indiquée par les informations d'attribution de ressources si le message de commande associé au SPS C-RNTI est reçu et le NDI est égal à 0 ; et
recevoir un paquet de données de retransmission transmis depuis la station de base via une ressource indiquée par les informations d'attribution de ressources si le message de commande associé au SPS C-RNTI est égal à 1 ; et
dans lequel l'attribution de ressources est changée d'une ressource qui est préalablement attribuée en la ressource indiquée par les informations d'attribution de ressources si la ressource indiquée par d'autres informations d'attribution de ressources est préalablement attribuée et que le NDI est égal à 0.

2. Procédé d'attribution de ressources selon la revendication 1, dans lequel l'attribution de ressources est une attribution de ressources semi-persistantes.

3. Procédé d'attribution de ressources selon la revendication 1, dans lequel le message de commande associé au SPS C-RNTI comprend une vérification de redondance cyclique CRC masquée par le SPS C-RNTI.

4. Procédé d'attribution de ressources selon la revendication 1, dans lequel le nouveau paquet de données est reçu périodiquement via la ressource indiquée par les informations d'attribution de ressources si le message de commande associé au SPS C-RNTI est reçu et le NDI est égal à 0.

5. Procédé d'attribution de ressources selon la revendication 1, dans lequel le paquet de données de retransmission est reçu une fois via la ressource indiquée par les informations d'attribution de ressources si le message de commande associé au SPS C-RNTI est reçu et le NDI est égal à 1.

6. Procédé d'attribution de ressources pour une station de base dans un réseau de communication sans fil, consistant à :
transmettre un identifiant temporaire de réseau radio cellulaire à programmation semi-persistante SPS C-RNTI à un terminal ;
transmettre un message de commande associé au SPS C-RNTI au terminal, lequel message de commande comprend des informations d'attribution de ressources et un nouvel indicateur de données NDI ;
transmettre un nouveau paquet de données transmis au terminal via une ressource indiquée par les informations d'attribution de ressources si le NDI transmis est égal à 0 ; et
transmettre un paquet de données de retransmission au terminal via une ressource indiquée par les informations d'attribution de ressources si le NDI transmis est égal à 1 ; et
dans lequel l'attribution de ressources est changée d'une ressource qui est préalablement attribuée en la ressource indiquée par les informations d'attribution de ressources si la ressource indiquée par d'autres informations d'attribution de ressources est préalablement attribuée et que le NDI est égal à 0.

7. Procédé d'attribution de ressources selon la revendication 6, dans lequel l'attribution de ressources est une attribution de ressources semi-persistantes.

8. Procédé d'attribution de ressources selon la revendication 6, dans lequel le message de commande associé au SPS C-RNTI comprend une vérification de redondance cyclique CRC masquée par le SPS C-RNTI.

9. Procédé d'attribution de ressources selon la revendication 6, dans lequel le nouveau paquet de données est transmis périodiquement via la ressource indiquée par les informations d'attribution de ressources si le NDI transmis est égal à 0.

10. Procédé d'attribution de ressources selon la revendication 6, dans lequel le paquet de données de retransmission est transmis une fois via la ressource indiquée par les informations d'attribution de ressources si le NDI transmis est égal à 1.

11. Appareil d'attribution de ressources d'un terminal mobile dans un système de communication sans fil, comprenant :
un émetteur-récepteur pour émettre et recevoir des données ; et
une unité de commande pour commander à l'émetteur-récepteur de recevoir un identifiant temporaire de réseau radio cellulaire à programmation semi-persistante SPS C-RNTI ; déterminer qu'un message de commande associé au SPS C-RNTI est reçu, lequel message de commande comprend des informations d'attribution de ressources et un nouvel indicateur de données NDI ; recevoir un nouveau paquet de données transmis depuis une station de base via une ressource indiquée par les informations d'attribution de ressources si le message de commande associé au SPS C-RNTI est reçu et le NDI est égal à 0 ; et recevoir un paquet de données de retransmission transmis depuis la station de base via une ressource indiquée par les informations d'attribution de ressources si le message de commande associé au SPS C-RNTI est égal à 1 ; et
dans lequel l'attribution de ressources est changée d'une ressource qui est préalablement attribuée à la ressource indiquée par les informations d'attribution de ressources si la ressource indiquée par d'autres informations d'attribution de ressources est préalablement attribuée et que le NDI est égal à 0.

12. Appareil d'attribution de ressources selon la revendication 11, dans lequel l'attribution de ressources est une attribution de ressources semi-persistantes.

13. Appareil d'attribution de ressources selon la revendication 11, dans lequel le message de commande associé au SPS C-RNTI comprend une vérification de redondance cyclique CRC masquée par le SPS C-RNTI.

14. Appareil d'attribution de ressources selon la revendication 11, dans lequel le nouveau paquet de données est reçu périodiquement via la ressource indiquée par les informations d'attribution de ressources si le message de commande associé au SPS C-RNTI est reçu et le NDI est égal à 0.

15. Appareil d'attribution de ressources selon la revendication 15, dans lequel le paquet de données de retransmission est reçu une fois via la ressource indiquée par les informations d'attribution de ressources si le message de commande associé au SPS C-RNTI est reçu et le NDI est égal à 1.

16. Appareil d'attribution de ressources d'une station de base dans un système de communication sans fil, comprenant :
un émetteur-récepteur pour émettre et recevoir des données ; et
une unité de commande pour commander à l'émetteur-récepteur de transmettre un identifiant temporaire de réseau radio cellulaire à programmation semi-persistante SPS C-RNTI ; transmettre un message de commande associé au SPS C-RNTI au terminal, lequel message de commande comprend des informations d'attribution de ressources et un nouvel indicateur de données NDI ; transmettre un nouveau paquet de données transmis au terminal via une ressource indiquée par les informations d'attribution de ressources si le NDI transmis est égal à 0 ; et transmettre un paquet de données de retransmission au terminal via une ressource indiquée par les informations d'attribution de ressources si le NDI transmis est égal à 1 ; et
dans lequel l'attribution de ressources est changée d'une ressource qui est préalablement attribuée en la ressource indiquée par les informations d'attribution de ressources si la ressource indiquée par d'autres informations d'attribution de ressources est préalablement attribuée et que le NDI est égal à 0.

17. Appareil d'attribution de ressources selon la revendication 16, dans lequel l'attribution de ressources est une attribution de ressources semi-persistantes.

18. Appareil d'attribution de ressources selon la revendication 16, dans lequel le message de commande associé au SPS C-RNTI comprend une vérification de redondance cyclique CRC masquée par le SPS C-RNTI.

19. Appareil d'attribution de ressources selon la revendication 16, dans lequel le nouveau paquet de données est transmis périodiquement via la ressource indiquée par les informations d'attribution de ressources si le NDI transmis est égal à 0.

20. Appareil d'attribution de ressources selon la revendication 16, dans lequel le paquet de données de retransmission est transmis une fois via la ressource indiquée par les informations d'attribution de ressources si le NDI transmis est égal à 1.
